# EUROPEAN PATENT APPLICATION

(11) **EP 0 732 371 A2**
(43) Date of publication of application: **18.09.1996**
(21) Application number: 96301463.4
(22) Date of filing: 05.03.1996
(51) Int. Cl.: C08L 71/12, C08L 81/02

(54) **Composition of poly(phenylene ether), poly(arylene sulfide) and maleimide compounds**

(30) Priority: 17.03.1995 US 405633
(71) Applicant: GENERAL ELECTRIC COMPANY, Schenectady, NY 12345 (US)
(72) Inventor: Brown, Sterling B., Schenectady, New York 12309 (US); Rice, Steven T., Scotia, New York 12302 (US); Hwang, Chorng-Fure R., Cary, North Carolina 27513 (US); Scobbo, James J., Jr., Slingerland, New York 12159 (US); Yates, John B., Glenmount, New York 12077 (US)
(74) Representative: Szary, Anne Catherine

(57) **Abstract**

Compositions are provided which comprise a poly(phenylene ether) resin, a poly(arylene sulfide) resin and a maleimide compound. The compositions exhibit improved chemical resistance and low flash molding characteristics and can further comprise impact modifiers, flame retardants, and reinforcing fillers. Articles molded from these compositions are useful in the electrical connector industry.

## Description

### BACKGROUND OF THE INVENTION

### Field of the Invention

This invention relates to blends of poly(phenylene ether) and poly(arylene sulfide) resins which exhibit enhanced properties such as ductility.

### Brief Description of the Related Art

The poly(phenylene ether) resins are a widely used class of thermoplastic engineering resins characterized by excellent hydrolytic stability, dimensional stability, toughness, heat resistance and dielectric properties. However, they are deficient in certain other properties such as solvent resistance.

For their part, poly(arylene sulfide)s are crystalline engineering thermoplastics with high crystalline melting temperatures, typically on the order of 285°C, and are characterized by low flammability, high modulus and excellent resistance to aggressive chemicals and solvents. However, their glass transition temperatures are very low, typically as low as 85°C; as a consequence, heat distortion temperatures are low in the absence of reinforcement with fillers such as glass fiber. In addition, poly(arylene sulfide) resins are very brittle, as evidenced by a tensile elongation to break for poly(phenylene sulfide) which is usually no greater than about 2.5% and frequently below 1%.

It might be expected that blends containing poly(arylene sulfide)-poly(phenylene ether) resins could be prepared which would have such properties as high solvent resistance, high heat distortion temperature, good ductility, and resistance to flammability. However, blends of this type are incompatible and undergo phase separation and delamination as a result of little or no phase interaction between the two resin phases. Molded parts made from such blends are typically characterized by low tensile and impact strengths. Accordingly, there have been numerous methods to improve the properties of these blends such as those found in JP-63205358 using various maleimide compounds. Other methods to improve the properties of blends containing poly(arylene sulfide)-poly(phenylene ether) resins have generally involved functionalizing the poly(phenylene ether) resin, the poly(arylene sulfide) resin, or both, presumably in order to make copolymers between the two resins. The resultant copolymers are thought to serve as compatibilizers for the remaining poly(phenylene ether) resin and poly(arylene sulfide) resin Examples of various compatibilized blends of poly(phenylene ether) resins and poly(arylene sulfide) resins can be found in U.S. Patent Nos. 5,290,881, 5,122,578, 5,292,789, and 4,528,346 as well as EP-341422-A, EP-368413-A, EP-491884-A, JP 03121159-A, and JP 04213357-A; all of which are incorporated herein by reference.

Accordingly, an object of the present invention is to provide poly(arylene sulfide) resin/poly(phenylene ether) resin compositions which exhibit desired levels of tensile strength and tensile elongation.

### SUMMARY OF THE INVENTION

The needs discussed above have been generally satisfied by the surprising discovery of an improved thermoplastic composition which comprises:
a) a poly(phenylene ether) resin;
b) a poly(arylene sulfide) resin; and
c) a maleimide compound;
wherein the poly(phenylene ether) resin is selected from the group of poly(phenylene ether) resins consisting of poly(phenylene ether) resins with nitrogen contents greater than about 600 ppm and functionalized poly(phenylene ether) resins.

In preferred embodiments, the compositions may additionally comprise functionalizing agents, impact modifiers, flame retardants, and fillers to further enhance the overall properties of the final composition. The description which follows will provide additional details regarding this invention.

### BRIEF DESCRIPTION OF THE DRAWINGS

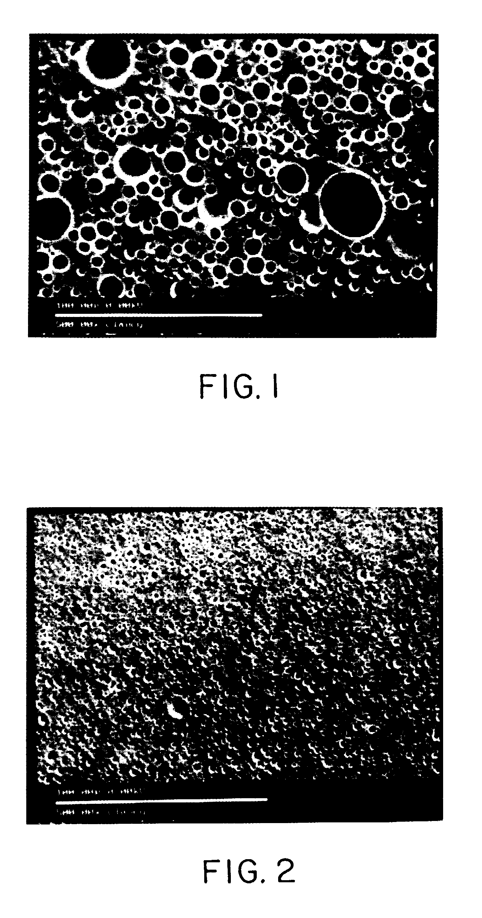

Figure 1 is a scanning electron micrograph depicting the morphology of Sample 5 containing a poly(phenylene ether) resin with a nitrigen content greater than about 600 ppm and a poly(phenylene sulfide) resin, wherein the poly(phenylene ether) resin particles have an average particle size of about 10-20 microns.

Figure 2 is a scanning electron micrograph depicting the morphology of Sample 8 containing a poly(phenylene ether) resin functionalized with citric acid and containing a poly(phenylene sulfide) resin and 4 weight percent of a maleimide compound, wherein the poly(phenylene ether) resin particles have an average particle size of about 2 microns.

### DETAILED DESCRIPTION OF THE INVENTION

The poly(phenylene ether) resins (hereinafter known as "PPE") employed in the present invention are known polymers comprising a plurality of structural units of the formula (I) 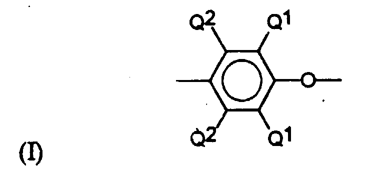 wherein each Q¹ is independently halogen, primary or secondary lower alkyl (i.e., alkyl containing up to about 7 carbon atoms), phenyl, haloalkyl, aminoalkyl, hydrocarbonoxy, or halohydrocarbonoxy wherein at least two carbon atoms separate the halogen and oxygen atoms; and each Q² is independently hydrogen, halogen, primary or secondary lower alkyl, phenyl, haloalkyl, hydrocarbonoxy or halohydrocarbonoxy as defined for Q¹. Most often, each Q¹ is alkyl or phenyl, especially C₁₋₄ alkyl, and each Q² is hydrogen.

Both homopolymer and copolymer PPE are included. The preferred homopolymers are those containing 2,6-dimethyl-1,4-phenylene ether units. Suitable copolymers include random copolymers containing, for example, such units in combination with 2,3,6-trimethyl-1,4-phenylene ether units. Also included are PPE containing moieties prepared by grafting vinyl monomers or polymers such as polystyrenes and elastomers, as well as coupled PPE in which coupling agents such as low molecular weight polycarbonates, quinones, heterocycles and formals undergo reaction in known manner with the hydroxy groups of two PPE chains to produce a higher molecular weight polymer.

The PPE generally have a number average molecular weight within the range of about 3,00040,000 and a weight average molecular weight within the range of about 20,000-80,000, as determined by gel permeation chromatography. Their intrinsic viscosity is most often in the range of about 0.15-0.6 dl./g., as measured in chloroform at 25°C.

The PPE are typically prepared by the oxidative coupling of at least one monohydroxyaromatic compound such as 2,6-xylenol or 2,3,6-trimethylphenol. Catalyst systems are generally employed for such coupling; they typically contain at least one heavy metal compound such as a copper, manganese or cobalt compound, usually in combination with various other materials.

Particularly useful PPE for many purposes are those which comprise molecules having at least one aminoalkyl-containing end group. The aminoalkyl radical is typically located in an ortho position to the hydroxy group. Products containing such end groups may be obtained by incorporating an appropriate primary or secondary monoamine such as di-n-butylamine or dimethylamine as one of the constituents of the oxidative coupling reaction mixture. Also frequently present are 4-hydroxybiphenyl end groups, typically obtained from reaction mixtures in which a by-product diphenoquinone is present, especially in a copper-halide-secondary or tertiary amine system. A substantial proportion of the polymer molecules, typically constituting as much as about 90% by weight of the polymer, may contain at least one of said aminoalkyl-containing and 4-hydroxybiphenyl end groups. Preferably the PPE will have a nitrogen content greater than about 600 ppm.

It will be apparent to those skilled in the art from the foregoing that the PPE contemplated for use in the present invention include all those presently known, irrespective of variations in structural units or ancillary chemical features.

For one embodiment of the present invention, it is preferred for at least some of the PPE to be functionalized. Functionalized PPE are those PPE which contain at least one reactive functional group. The functional group may be present on a polymer endgroup or along the backbone of the polymer chain.

One way to prepare a functionalized PPE is to functionalize the PPE by reacting the PPE with at least one compound having both:
(i) a carbon-carbon double bond or a carbon-carbon triple bond and
(ii) a carboxylic acid, acid anhydride, acid amide, imido, carboxylic acid ester, epoxy, amino, hydroxyl, or carboxylic acid ammonium salt

These compounds are sometimes referred to as compatibilizers or functionalizers and the resultant PPE's are commonly referred to as compatibilizing PPE or functionalized PPE. Typical compounds used to accomplish the functionalization include: maleic anhydride, fumaric acid, maleic hydrazide, methylnadic anhydride, fatty oils (e.g., soybean oil, tung oil, linseed oil, sesame oil), unsaturated carboxylic acids such as acrylic, crotonic, methacrylic acid and oleic acid, unsaturated alcohols such as allyl alcohol and crotyl alcohol and unsaturated amines such as allylamine and trialkyl amine salts of unsaturated acids such as triethylammonium fumarate and tri-n-butylammonium fumarate. Such typical reagents for preparing a useful functionalized polyphenylene ether are described in U.S. Patent Nos. 4,315,086, 4,755,566, and 4,888,397, which are incorporated herein by reference.

It is sometimes advantageous to use an initiator in the reaction of the PPE with the olefinic compound. Suitable initiators for use in the current invention include free radical initiators generally known to the art Specific initiators include various peroxides and hydroperoxides. Specific examples include benzoyl peroxide, 2,5-di(t-butylperoxy)hexane, dicumyl peroxide, 2,5-dimethyl-2,5-di(t-butylperoxy)hexyne-3 and cumene peroxide, with 2,5,-dimethyl-2,5-di(t-butylperoxy)hexyne-3 being preferred. When it is used, the amount of initiator used can vary from about 0.05 weight percent to about 0.5 weight percent relative to the weight of the PPE.

Non-polymeric aliphatic polycarboxylic acids are also useful for preparing an appropriate functionalized PPE. Included in the group of species, also known as compatibilizers or functionalizers, are the aliphatic polycarboxylic acids, acid esters and acid amides represented by the formula (II):

(II) (R^{I}O)ₘR(COOR^{II})ₙ(CONR^{III}R^{IV})ₛ

wherein R is a linear or branched chain, saturated aliphatic hydrocarbon of from 2 to 20, preferably 2 to 10, carbon atoms; R^{I} is selected from the group consisting of hydrogen or an alkyl, aryl, acyl or carbonyl dioxy group of 1 to 10, preferably 1 to 6, most preferably 1 to 4, carbon atoms, especially preferred is hydrogen; each R^{II} is independently selected from the group consisting of hydrogen or an alkyl or aryl group of from 1 to 20 carbon atoms preferably from 1 to 10 carbon atoms; each R^{III} and R^{IV} is independently selected from the group consisting essentially of hydrogen or an alkyl or aryl group of from 1 to 10, preferably from 1 to 6, most preferably 1 to 4, carbon atoms; m is equal to 1 and (n+s) is greater than or equal to 2, preferably equal to 2 or 3, and n and s are each greater than or equal to zero and wherein (OR^{I}) is alpha or beta to a carbonyl group and at least two carbonyl groups are separated by 2 to 6 carbon atoms. Obviously, R^{I}, R^{II}, R^{III} and R^{IV} cannot be aryl when the respective substituent has less than 6 carbon atoms.

Illustrative of suitable polycarboxylic acids are citric acid, malic acid, and agaricic acid; including the various commercial forms thereof, such as, for example, the anhydrous and hydrated acids. Illustrative of acid esters useful herein include, for example, acetyl citrate and mono- and/or di- stearyl citrates and the like. Suitable acid amides useful herein include for example N,N'- diethyl citric acid amide; N,N'-dipropyl citric acid amide; N-phenyl citric acid amide; N-dodecyl citric acid amide; N,N'-didodecyl citric acid amide and N-dodecyl malic acid amide. Derivatives of the foregoing polycarboxylic acids are also suitable for use in the practice of the present invention. Suitable functionalizing compounds can be found in U.S. Patent Nos. 4,315,086, 4,755,566, and 5,000,897, which are incorporated herein by reference.

The amount of the above mentioned compatibilizers that is required to appropriately functionalize the PPE is that which is sufficient to improve the compatibility between the various components in the composition. An effective amount of the above mentioned compatibilizers is generally up to about 8% by weight, and is preferably from about 0.05% to about 4% by weight; based on the amount of the PPE. In the most preferred embodiments, the amount of the compatibilizer is in the range of about 0.1% to about 3% by weight based on the amount of the PPE.

Another useful method for preparing an appropriate functionalized PPE resin involves reacting a PPE resin with a compound containing an acyl functional group. Non-limiting examples include chloroformyl succinic anhydride, chloroethanoyl succinic anhydride, trimellitic anhydride acid chloride, 1-acetoxy-acetyl-3,4-dibenzoic acid anhydride, and terephthalic acid acid chloride. Additional examples and methods to prepare such functionalized PPE can be found in U.S. Patent Nos. 4,600,741 and 4,642,358, each of which is incorporated herein by reference.

Various chloroepoxytriazine compounds are also useful for preparing an appropriate functionalized PPE resin. Illustrative compounds of this type include 2-chloro-4,6-diglycidoxy-1,3,5-triazine; 2-chloro-4-(n-butoxy)-6-glycidoxy-1,3,5-triazine; and 2-chloro-4-(2,4,6-trimethylphenoxy)-6-glycidoxy-1,3,5-triazine, also known as mesityl glycidyl chlorocyanurate (MGCC.). Methods to prepare these compounds and functionalized PPE resins can be found in U.S. Patent Nos. 4,895,945, 5,041,504, 5,089,566 and 5,096,979, all of which are incorporated herein by reference.

Ortho ester derivatives of chlorotriazine compounds, as previously noted for epoxy groups, are also useful for preparing an appropriate functionalized PPE resin. The ortho ester compounds include 2-chloro-4-(2-methoxy-2-methyl-1,3-dioxolanyl)methoxy-6-phenoxy-1,3,5-triazine, for example. References to prepare appropriate triazine compounds can be found in U.S. Patent 5,132,373, which is incorporated herein by reference.

Other illustrative examples of ortho ester monomers which may be employed in the present invention include 4-acryloyloxymethyl-2-methoxy-2-methyl-1,3-dioxolane, 4-methacryloyloxymethyl-2-methoxy-2-methyl-1,3-dioxolane, 4-acryloyloxymethyl-2-methoxy-2-phenyl-1,3-dioxolane and the isomeric mixture of 4-(2-methoxy-2-methyl-1,3-dioxolanyl)methyl vinylbenzyl ethers. Methods for the preparation of various useful ortho ester materials and their reaction with PPE can be found in U.S. Patent Nos. 5,132,373, 5,142,049, 5,171,866, 5,153,290 and 5,212,255, which are all incorporated herein by reference.

The poly(arylene sulfide) resins (referred to hereinafter as "PPS") used in the present invention are derived from the known polymers containing arylene groups separated by sulfur atoms. The preferred poly(arylene sulfide) resins include various poly(phenylene sulfide)s, for example, poly(p-phenylene sulfide) and substituted poly(phenylene sulfide)s. Typical PPS polymers comprise at least 70 molar %, preferably at least 90 molar %, of recurring units of the following structural formula (III): 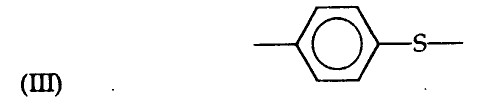 When the amount of said recurring units is less than 70 molar %, the heat resistance may be insufficient

The other 30 molar % or less, and preferably 10 molar % or less, of the recurring units of PPS can be those of the following structural formulae (IV): 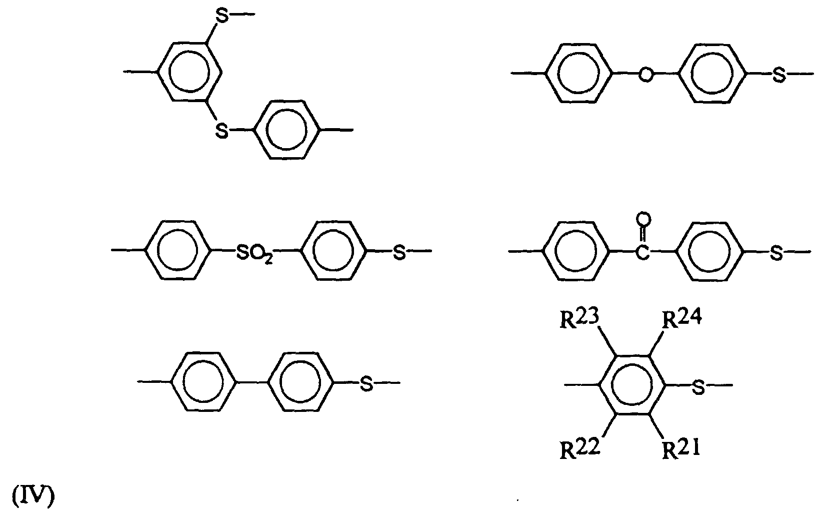 wherein R²¹, R²², R²³ and R²⁴ are independently selected from the group consisting of hydrogen, halogen, alkyl, phenyl, alkoxy, aryloxy, nitro, amino, and carboxy groups.

The PPS of the present invention may be linear, branched, or cured polymers, or mixtures of the same. Linear PPS of relatively low molecular weight may be prepared by, for example, a process disclosed in the specification of U.S. Patent No. 3,354,129, which is incorporated herein by reference. Linear PPS having a relatively high molecular weight may be prepared by, for example, the process disclosed in the specification of U.S. Patent No. 3,919,177, which is incorporated herein by reference. Branched PPS may be prepared by the use of a branching agent, for example, 1,3,5-trichlorobenzene, which is disclosed in U.S. Patent 4,749,163 and which is incorporated herein by reference. The degree of polymerization of the polymers prepared by the processes of U.S. Patent Nos. 3,354,129, 3,919,177 and 4,749,163 can be further increased by curing with heating the same in an oxygen atmosphere or in the presence of a crosslinking agent such as a peroxide after polymerization

The PPS may be functionalized or unfunctionalized. If the PPS is functionalized, the functional groups may include, but are not limited to, amino, carboxylic acid, metal carboxylate, disulfide, thio, and metal thiolate groups. One method for incorporation of functional groups into PPS can be found in U.S. Patent No. 4,769,424, which is incorporated herein by reference, which discloses incorporation of substituted thiophenols into halogen substituted PPS. Another method involves incorporation of chlorosubstituted aromatic compounds containing the desired functionality reacted with an alkali metal sulfide and chloroaromatic compounds. A third method involves reaction of PPS with a disulfide containing the desired functional groups, typically in the melt or in a suitable high boiling solvent such as chloronaphthalene.

Though the melt viscosity of PPS used in the present invention is not particularly limited so far as the blends which can be obtained, a melt viscosity of at least about 100 Poise is preferred from the viewpoint of the toughness of PPS per se and that of about 10,000 Poise or less is preferred from the viewpoint of the injection moldability.

The PPS in this invention may also be treated to remove unwanted contaminating ions by immersing the resin in deionized water or by treatment with an acid, typically hydrochloric acid, sulfuric acid, phosphoric acid or acetic acid as found in Japanese Kokai Nos. 3,236,930-A, 1,774,562-A, 1,299,872-A and 3,236,931-A, all of which are incorporated herein by reference. For some product applications, it is preferred to have a very low impurity level in the PPS. The impurity level is usually represented as the percent by weight ash remaining after burning a PPS sample. Typically ash contents of the PPS of less than about 1% by weight are desirable, with ash numbers less than about 0.5% by weight preferred and ash numbers less than about 0.1% by weight most preferred.

Addition of an effective amount of at least one maleimide compound having at least two maleimide groups to the PPE/PPS compositions, optionally in combination with a reinforcing filler, led to the surprisingly discovery that the resulting compositions had a unique combination of beneficial properties, such as, for example, increased ductility and tensile properties. One of the most surprising discoveries was that by combining the above components in effective amounts, it was possible to create a resin composition with no flash capabilities when the resin is injection molded. The term "no flash" resin composition is intended to include not only those compositions which exhibit no flash, but also those compositions which exhibit substantially no flash characteristics.

Thus, according to one embodiment of the invention, the maleimide compound is added in an amount effective to provide a thermoplastic resin composition which exhibits improved physical properties, such as improved tensile properties or no flash capabilities over the same composition without a maleimide compound.

The term "maleimide" refers to compounds which contain structures represented by formula (V). 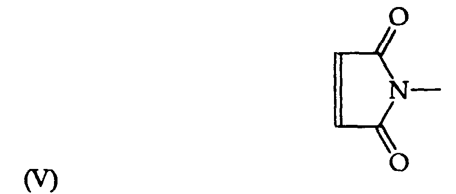 The maleimide compound is typically a liquid or solid maleimide compound. The preferred maleimide compounds comprise at least two maleimide groups per molecule, although the average maleimide number may be less than 2 per molecule (e.g., the maleimide compound may be a mixture of maleimide compounds having a variety of maleimide groups per molecule). Maleimide compounds having a molecular weight from about 200 to about 10,000 are preferred. The maleimide compounds may be used singly or as mixtures of two or more.

Suitable maleimide compounds include those derived from various diamine or triamine compounds. Illustrative amine compounds include, for example:
m-phenylenediamine;
p-phenylenediamine;
4,4'-diaminodiphenylpropane,
4,4'-diaminodiphenylmethane (commonly named 4,4'-methylenedianiline);
4,4'-diaminodiphenyl sulfide;
4,4'-diaminodiphenyl sulfone;
4,4'-diaminodiphenyl ether (commonly named 4,4'-oxydianiline);
1,5-diaminonaphthalene;
3,3-dimethylbenzidine;
3,3-dimethoxybenzidine;
1,3-diamino-4-isopropylbenzene;
1,2-bis(3-aminopropoxy)ethane; benzidine;
m-xylylenediamine;
2,4-diaminotoluene;
2,6-diaminotoluene;
bis(4-aminocyclohexyl)methane;
3-methylheptamethylenediamine;
4,4-dimethylheptamethylenediamine;
2,11-dodecanediamine;
octamethylenediamine;
3-methoxyhexamethylenediamine;
2,5-dimethylhexamethylenediamine;
2,5-dimethylheptamethylenediamine;
3-methylheptamethylenediamine;
5-methylnonamethylenediamine;
1-4-cyclohexanediamine;
1,12-octadecanediamine;
bis(3-aminopropyl)sulfide;
N-methyl-bis(3-aminopropyl)amine;
hexamethylenediamine;
heptamethylenediamine;
nonamethylenediamine;
decamethylenediamine;
1,3-bis(4-aminobutyl)tetramethyldisiloxane;
1,3-bis(4-aminopropyl)-1,1,3,3-tetramethyldisiloxane;
tris(2-aminoethyl)amine);
tris(2-aminopropyl)amine;
tris(p-aminopehoxy)dimethylsilane;
triaminopyrimidine; and
mixtures of such amines.

Maleimide compounds may also include maleimide-functional polymers. Examples of these polymers include: maleimide-functional polystyrene and polyolefins (i.e., polyethylene and polypropylene), maleimide-functional elastomers such as EPR and styrene based block copolymers, maleimide-functional polysiloxanes, maleimide-functional polycarbonates, polyimides and polyetherimides, maleimide-functional polyalkylene glycols and similar functionalized polymers.

Another surprising discovery was that by combining a functionalized PPE and at least one maleimide compound with the PPS, it was possible to obtain compositions that have a marked improvement in chemical resistance to common automotive solvents over comparative compositions comprising unfunctionalized PPE. Thus, according to another embodiment of the invention, a functionalized PPE is used in combination with at least one maleimide compound and PPS to obtain superior chemical resistance. The maleimide compound is generally added in an amount sufficient to improve the compatibility between the PPE and PPS. Compatibility is meant to include the minimization of gross phase separation between the components of the blend (i.e., the PPE and the PPS). Indicators of improved compatibilization include, for example, increased tensile elongation, reduced delamination tendency, increased ductility and improved phase morphology stabilization. It is through the effect of improving the compatibilization between the blend components which determines, in part, the desirable physical properties of the blend. The amount of the maleimide compound used depends in part on the molecular weight of the maleimide compound and the number of active maleimide species available on the maleimide compound. When relatively low molecular weight maleimide compounds are used, relatively low amounts can achieve significantly improved compatibility between the components of the composition. When the maleimide is attached to a polymer with only a relatively small number of maleimide groups, a greater amount of the compound may be required to obtain the same degree of compatibility between the components of the composition The amount of the maleimide compound is typically in the range from about 0.1 weight percent to about 20 weight percent based on the weight of the entire composition.

The invention also includes compositions containing elastomeric impact modifiers compatible with either or both the PPE and the PPS. Impact modifiers for PPE and PPS are typically derived from one or more monomers selected from the group consisting of olefins, vinyl aromatic monomers, acrylic and alkylacrylic acids and their ester derivatives as well as conjugated dienes. Especially preferred impact modifiers are the rubbery high molecular weight materials including natural and synthetic polymeric materials showing elasticity at room temperature. They include both homopolymers and copolymers, including random, block, radial block, graft and core-shell copolymers as well as combinations thereof. The impact modifier may also be functionalized.

Olefin polymers and copolymers employable in the invention include low density polyethylene (LDPE), high density polyethylene (HDPE), linear low density polyethylene (LLDPE), isotactic polypropylene, poly(l-butene), poly(4-methyl-1-pentene), and the like. Additional olefin copolymers include copolymers of one or more α-olefins, particularly ethylene, with copolymerizable monomers including, for example, vinyl acetate, acrylic acids and alkylacrylic acids as well as the ester derivatives thereof including, for example, ethyl acrylate, methacrylic acid, methyl methacrylate and the like. Also suitable are the ionomer resins, which may be wholly or partially neutralized with metal ions.

A particularly useful class of impact modifiers are those derived from the vinyl aromatic monomers. These include AB and ABA type block, tapered and radial block copolymers and vinyl aromatic-conjugated diene core-shell graft copolymers.

An especially preferred subclass of vinyl aromatic monomer-derived resins is the block copolymers comprising monoalkenyl arene (usually styrene) blocks and conjugated diene (e.g., butadiene or isoprene) or olefin (e.g., ethylene-propylene, ethylene-butylene) blocks and represented as AB and ABA block copolymers. The conjugated diene blocks may be partially or entirely hydrogenated, whereupon the properties are similar to the olefin block copolymers.

Suitable AB type block copolymers are disclosed in, for example, U.S. Patent Nos. 3,078,254, 3,402,159, 3,297,793, 3,265,765 and 3,594,452 and U.K. Patent 1,264,741, all incorporated herein by reference. Examples of typical species of AB block copolymers include polystyrene-polybutadiene (SBR), polystyrene-poly(ethylenepropylene), polystyrene-polyisoprene and poly(α-methylstyrene)-polybutadiene. Such AB block copolymers are available commercially from a number of sources, including Phillips Petroleum under the trademark SOLPRENE, Shell Chemical Co. under the trademark KRATON, and Kuraray under the trademark SEPTON.

Additionally, ABA triblock copolymers and processes for their production as well as hydrogenation, if desired, are disclosed in U.S. Patent Nos. 3,149,182, 3,231,635, 3,462,162, 3,287,333, 3,595,942, 3,694,523 and 3,842,029, which are all incorporated herein by reference.

Examples of triblock copolymers include polystyrene-polybutadiene-polystyrene (SBS), polystyrene-polyisoprene-polystyrene (SIS), poly(α-methyl-styrene)-polybutadiene-poly(α-methylstyrene) and poly(α-methylstyrene)-polyisoprene-poly(α-methylstyrene). Particularly preferred triblock copolymers are available commercially from Shell Chemical Co. under the trademarks CARIFLEX and KRATON, and Kuraray under the trademark SEPTON.

Another class of useful impact modifiers is derived from conjugated dienes. While many copolymers containing conjugated dienes have been discussed above, additional conjugated diene modifier resins include, for example, homopolymers and copolymers of one or more conjugated dienes including, for example, polybutadiene, butadienestyrene copolymers, isoprene-isobutylene copolymers, chlorobutadiene polymers, butadiene-acrylonitrile copolymers, polyisoprene, and the like. Ethylene-propylene-diene monomer rubbers (EPDM's) may also be used. They are typified as comprising predominantly ethylene units, a moderate amount of propylene units and up to about 20 mole percent of nonconjugated diene monomer units. They may also contain reactive groups such as acid, oxazoline, ortho-ester, epoxy, amine, or anhydride. Many EPDM's and processes for the production thereof are disclosed in U.S. Patent Nos. 2,933,480, 3,000,866, 3,407,158, 3,093,621 and 3,379,701, which are all incorporated herein by reference.

Other useful impact modifiers include copolymers of an α-olefin with a glycidyl ester of an α,β-unsaturated carboxylic acid. α-Olefin as used herein means ethylene, propylene, butene-1, etc. Among them, ethylene is preferred. The glycidyl esters of the α,β-unsaturated acids are compounds of the general formula (VI): 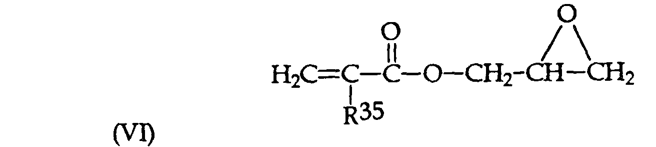 wherein R³⁵ represents a hydrogen atom or a lower alkyl group. Examples of the glycidyl esters of α,β-unsaturated acids include glycidyl acrylate, glycidyl methacrylate and glycidyl ethacrylate. The epoxy functional olefinic elastomer is preferably an olefinic copolymer containing of from about 60% to about 99.5% by weight of an α-olefin and of from about 0.5% to about 40% by weight of a glycidyl ester of an α,β-unsaturated carboxylic acid, preferably of from about 3% to about 30% by weight; based on the weight of the elastomer's composition. When this amount is less than about 0.5% by weight, no intended effects can be obtained and when it exceeds about 40% by weight, gelation occurs during melt-blending resulting in degradation of the extrusion stability, moldability and mechanical properties of the product Suitable epoxy functional α-olefin elastomers include: ethylene-glycidyl acrylate copolymers, ethylene-glycidyl methacrylate copolymers, ethylene-glycidyl methacrylate-vinyl acetate terpolymers, ethylene-glycidyl methacrylate-methyl acrylate terpolymers, ethylene-ethyl acrylate-glycidyl methacrylate terpolymers. The preferred epoxy functional elastomers are available from Sumitomo under the tradenames IGETABOND and BONDFAST and from Elf Atochem under the tradename LOTADER.

Other suitable impact modifiers are the core-shell type graft copolymers. In general, these have a predominantly conjugated diene rubbery core or a predominantly cross-linked acrylate rubbery core and one or more shells polymerized thereon and derived from monoalkylarene and/or acrylic monomers alone or, preferably, in combination with other vinyl monomers. The shells of these impact modifiers may also contain reactive groups, for example, acid, epoxy, oxazoline, ortho-ester, amine, or anhydride groups. The core-shell copolymers are widely available commercially in pellet and powder forms, for example, from Rohm and Haas Company as grades including EXL-3330, EXL-3691, EXL-2600, EXL-2607, EXL-2647, EXL-3386, and EXL-3607, and are described in U.S. Patent Nos. 3,808,180, 4,034,013, 4,096,202, 4,180,494 and 4,292,233.

Also useful are the core-shell copolymers wherein an interpenetrating network of the resins employed characterizes the interface between the core and shell. Especially preferred in this regard are the ASA type copolymers available from GE Plastics under the tradename GELOY resin, and described in U.S. Patent No. 3,944,631.

In addition, there may be employed the above-described polymers and copolymers having copolymerized therewith or grafted thereon monomers having functional groups and/or polar or active groups. The epoxy functional α-olefin elastomers previously described are an example of this type of useful impact modifier. Finally, other suitable impact modifiers include Thiokol rubber, polysulfide rubber, polyurethane rubber, polyether rubber (e.g., polypropylene oxide), epichlorohydrin rubber, thermoplastic polyester elastomers and thermoplastic poly(ether-ester) and poly(ester-amide) elastomers.

The proportion of impact modifier or other resinous material is subject to wide variation. The amount of impact modifier used is generally an amount sufficient to improve the ductility of the compositions. Impact modifiers such as diblock or triblock copolymers, when utilized, are usually present in an amount up to about 50 parts per 100 parts of PPE. The epoxy functional olefinic elastomers, when utilized, are usually present in an amount up to about 50 parts per 100 parts of PPS. Other impact modifiers may also be present and mixtures of various impact modifiers may also be utilized.

The addition of reinforcing fillers is also contemplated for the compositions of the present invention. Suitable reinforcing fillers are those which increase the rigidity of the blend composition. Amongst these, fibrous materials are preferred, in particular glass fibers made from low alkali E-glass, having a fiber diameter from about 8 µm to about 14 µ m. The length of the glass fibers in the finished molded part is typically, for example, from about 0.01 mm to about 0.5 mm. The glass fibers may be employed as rovings or as chopped or milled glass fibers, and may be provided with a suitable finish and an adhesion promoter or promoter system based on silanes. The amount of reinforcing fillers is advantageously from about 5 weight percent to about 60 weight percent, especially from about 10 weight percent to about 40 weight percent based on the total weight of the composition.

Other fibrous reinforcing materials, e.g. carbon fibers, potassium titanate single-crystal fibers, gypsum fibers, wollastonite, aluminum oxide fibers or asbestos may also be utilized. Non-fibrous fillers, e.g. glass beads, hollow glass beads, talcs, micas, chalks, quartzes and natural or calcined kaolins are further preferred fillers, as are combinations of these materials with glass fibers. Like the glass fibers, these latter fillers may be provided with a finish and/or an adhesion promoter or adhesion promoter system. The combination of a non-fibrous filler that also has a platey structure, e.g. talcs, micas and platey kaolins, with glass fibers is especially preferred for some applications to reduce the anisotropic properties of the final composition due to alignment of the glass fiber with the direction of the mold filling during processing. The amount of non-fibrous filler can range from 0% to about 50% by weight based on the total weight of the entire composition.

The compositions of the present invention may also contain at least one polymer of an alkenylaromatic compound. Suitable polymers of this type may be prepared by methods known in the art including bulk, suspension and emulsion polymerization. They generally contain at least about 25% by weight of structural units derived from an alkenylaromatic monomer of the formula (VI): 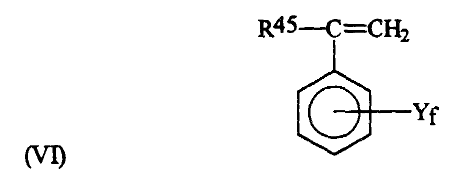 wherein R⁴⁵ is hydrogen, lower alkyl or halogen; Y is hydrogen, vinyl, halogen or lower alkyl; and f is from 0 to 5. These resins include homopolymers of styrene, chlorostyrene and vinyltoluene, random copolymers of styrene with one or more monomers illustrated by acrylonitrile, butadiene, α-methylstyrene, ethylvinylbenzene, divinylbenzene and maleic anhydride, and rubber-modified polystyrenes comprising blends and grafts, wherein the rubber is a polybutadiene or a rubbery copolymer of about 98-65% styrene and about 2-35% diene monomer. These rubber modified polystyrenes include high impact polystyrene (commonly referred to as "HIPS"). Non-elastomeric block copolymer compositions of styrene and butadiene can also be used that have linear block, radial block and tapered block copolymer architectures. They are commercially available from such companies as Fina Oil under the trademark FINACLEAR resins and from Phillips Engineering Resins under the trademark K-RESINS.

The alkenylaromatic compound, when present, is generally used in the range from about 1% to about 25% by weight and preferably from about 5% to about 15% by weight; based on the weight of the total composition.

The compositional ratios of the present invention, all, except the functionalizing agent, of which are expressed as percentages by weight of the total composition, can range from a level from about 5% to about 95% by weight of PPE resin, about 5% to about 95% by weight of PPS, up to about 20% by weight of maleimide compound, and further comprise up to about 8% by weight of a functionalizing agent based on the weight of the PPE; up to about 20% by weight of epoxy functional elastomer, up to about 20% by weight of elastomeric block copolymer, up to about 25% by weight of alkenyl aromatic polymer.

The composition preferably comprises PPE at a level, expressed as percentages by weight of the total composition, from about 5% to about 95% by weight, more preferably between about 25% to about 40% by weight, and most preferably from about 30% to about 35% by weight The composition preferably comprises the PPS at a level, expressed as percentages by weight of the total composition, from about 5% to about 95% by weight, more preferably from about 40% to about 65% by weight, and most preferably from about 50% to about 60% by weight The composition preferably comprises the maleimide compound at a level, expressed as percentages by weight of the total composition, from about 0.1% to about 15% by weight, more preferably from about 0.1% to about 10% by weight, and most preferably from about 0.5% to about 8% by weight The composition preferably comprises the functionalizing agent at a level, expressed as percentages by weight of the PPE, up to about 8% by weight, more preferably from about 0.05% to about 4% by weight, and most preferably from about 0.1% to about 3% by weight The composition preferably comprises at least one impact modifier at a level, expressed as percentages by weight of the total composition, from about 2% to about 18% by weight, more preferably from about 3% to about 10% by weight, and most preferably from about 4% to about 7% by weight.

Preferably PPS and PPE are in a weight ratio of between about 75:25 and about 30:70, more preferably between about 70:30 and about 50:50, and most preferably between about 70:30 and about 60:40. Preferably the epoxy functional elastomer and the elastomeric block copolymer are in the composition in a weight ratio of between about 15:2 and about 5:10, more preferably between about 12:3 and about 6:6, and most preferably between about 10:6 and about 7:5. Preferably the combined total weight percent, expressed as percentages by weight of the total composition, of epoxy functional elastomer and elastomeric block copolymer in the composition is between about 5% and about 21% by weight, more preferably between about 8% and about 16% by weight, and most preferably between about 10% and about 14% by weight Preferably the composition is free of additional resin materials such as polyesters, polyimides, polyamides and polycarbonate resins. Determination of an exact ratio for a composition is, in part, determined by the intended ultimate end-use application of the composition and the necessary properties needed for the application.

The present compositions exhibit improvements in tensile strength and tensile elongation, two properties which are critical for many electronic part applications. The compositions further exhibit no flash characteristics and high chemical resistance. Other advantageous properties exhibited by the present compositions include low coefficient of thermal expansion, low moisture absorption, high heat distortion temperature and long term heat stability. Furthermore, the present compositions exhibit enhanced falling dart impact resistances and improved tensile elongations at break.

The compositions may contain or be free of conventional additives such as plasticizers, pigments, dyes, lubricants, mold release agents, stabilizers, antioxidants, or crystallization nucleants.

Preparation of the compositions of the present invention is normally achieved by melt blending the ingredients under conditions for the formation of an intimate blend. Such conditions often include mixing in single or twin screw type extruders or similar mixing devices which can apply a shear to the components. It is often advantageous to apply a vacuum to the melt through a vent port in the extruder to remove volatile impurities in the composition. The compositions of the present invention are useful for making molded articles such as housings for electrical connectors in under-the-hood automotive applications, and are useful for making various other molded articles.

### EXAMPLES

The compositions of Table I were extruded on a Welding-Engineers twin-screw extruder at a temperature of about 275-300°C with a vacuum of 10-20 inches Hg applied to the melt during compounding. The resultant compositions were molded using an Engel injection molding machine using a temperature set of about 290-300°C and a mold temperature of about 120-130°C. All the compositions were tested for tensile yield and tensile elongation at break according to ASTM D638.

The actual extrusion conditions employed may affect the physical properties of the resultant blend. In a preferred embodiment of the present invention it is advantageous to premix the PPE with the functionalizing agent to form a functionalized PPE. The functionalized PPE can then be mixed with the remaining ingredients to form the final composition. By functionalizing the PPE before adding the maleimide compound it is thought that reaction of the functionalizing agent with the maleimide compound can be avoided until after the desired reaction between the functionalizing agent and the PPE can be achieved. Premixing the PPE with the functionalizing agent before mixing with the maleimide compound also maximizes the utilization of the functionalizing agent to functionalize the PPE. The preparation of the functionalized PPE can be accomplished in several ways. In one embodiment of the present invention, a functionalized PPE is made by intimately admixing the functionalizing agent with the PPE without the maleimide compound present in a separate processing step. In a subsequent processing step any remaining ingredients, including the maleimide compound, are intimately admixed. In another embodiment, a single extruder that has at least two ports for introduction of ingredients is utilized. The PPE and the functionalizing agent are introduced into the throat of the extruder (first port) and compounded. Simultaneously, additional ingredients are introduced into ports downstream of the first port and the compounding continued. Each portion of the extruder is preferably vacuum vented. Typical compounding temperatures are in the range from about 275-340° C.

The materials used in the following examples were as follows:

PPE is derived from poly(2,6-dimethylphenylene ether) resin having an intrinsic viscosity of about 0.46 dl/gm measured in chloroform at 25°C, obtained from GE Plastics. This PPE was extruded with a vacuum applied to the melt followed by dissolving the PPE extrudate into toluene and precipitating the PPE with the use of methanol. The nitrogen level was less than 600 ppm.

PPE-AMINE is poly(2,6-dimethylphenylene ether) resin having an intrinsic viscosity of about 0.46 dl/gm measured in chloroform at 25°C, and an nitrogen level of about 1000 ppm, obtained from GE Plastics.

PPE-CA GRD is a nucleophile-containing PPE prepared by extruding 3% by weight citric acid with PPE. The PPE-CA was dried at about 110°C and ground into a fine powder prior to use. The nitrogen level was less than 600 ppm for the PPE-CA GRD.

PPE-CA is a nucleophile-containing PPE prepared by extruding 3% by weight citric acid with PPE. The PPE-CA was dissolved into toluene, precipitated with the use of methanol, and dried at about 110°C prior to use. The nitrogen level was less than 600 ppm for the PPE-CA.

PPS is a cured PPS.

MAL-1 is 4,4'-bismaleimido-diphenylmethane.

Table I contains illustrative examples of blends containing a PPE, PPS, and a maleimide compound. The compositions had a weight ratio of PPS to the PPE of about 63:37 with the amount of maleimide compound given as percentages by weight based on the sum of the PPS and PPE.

**Table L**

| sample | PPE type | maleimide | Tensile str.^{a} | Elg.^{b} |
|---|---|---|---|---|
| 1 | PPE | 0 | 6602 | 4.0 |
| 2 | PPE | 1 | 5186 | 3.0 |
| 3 | PPE | 2 | 5448 | 3.4 |
| 4 | PPE | 4 | 5634 | 3.5 |
| 5 | PPE-AMINE | 0 | 7757 | 4.7 |
| 6 | PPE-AMINE | 1 | 8176 | 5.3 |
| 7 | PPE-AMINE | 2 | 8582 | 5.5 |
| 8 | PPE-AMINE | 4 | 9190 | 6.0 |
| 9 | PPE-CA GRD | 0 | 7693 | 5.0 |
| 10 | PPE-CA GRD | 1 | 9330 | 6.1 |
| 11 | PPE-CA GRD | 2 | 9146 | 5.8 |
| 12 | PPE-CA GRD | 4 | 8287 | 5.1 |
| 13 | PPE-CA | 0 | 8007 | 4.6 |
| 14 | PPE-CA | 1 | 9620 | 5.8 |
| 15 | PPE-CA | 2 | 11140 | 7.2 |
| 16 | PPE-CA | 4 | 10940 | 6.9 |

| | | | | |
|---|---|---|---|---|
| ^{a} Tensile strength in psi. | | | | |
| ^{b} Tensile elongation in %. | | | | |

As indicated by the data in Table I, blends of PPS and PPE-AMINE or PPE-CA show a surprising improvement in both tensile strength and tensile elongation with the addition of a maleimide compound. Comparison of samples 1 to 4 utilizing a PPE with an amine number of less than 600 ppm illustrates a reduction in the tensile properties as compared to samples 5 to 8 which are made with a PPE having an amine number greater than about 600 ppm. As seen by comparison of sample 5 (control) to samples 6, 7 and 8 both the tensile strength and tensile elongation were improved with the addition of the maleimide compound. Comparison of samples 9 to 12 to samples 1 to 4 respectively, illustrates the surprising improvement in tensile properties with the functionalization of the PPE with citric acid prior to compounding with the PPS and maleimide compound. Comparison of samples 13 to 16 to samples 9 to 12 respectively, illustrates the very surprising improvement in tensile properties obtained by dissolving and precipitating the PPE-CA prior to use in the blends. The PPE-CA in samples 9 to 12 were mechanically ground before compounding with the PPS and maleimide compound. As seen by the data in Table I, the PPE should either have a nitrogen content greater than about 600 ppm or should be functionalized. Functionalized PPE with nitrogen contents greater than 600 ppm are also useful when combind with PPS and a maleimide compound.

Another indication of the improvements obtained with the addition of a maleimide compound to PPS and PPE-AMINE or functionalized PPE compositions, can be seen in scanning electron micrographs provided for several samples. Figure 1 is a scanning electron micrograph depicting the morphology of Sample 5 containing PPS and PPE-AMINE wherein the PPE particles have an average particle size of about 10-20 microns. Figure 2 is a scanning electron micrograph depicting the morphology of Sample 8 containing PPS and PPE-AMINE and containing maleimide compound, wherein the PPE particles have an average particle size of about 2 microns. The reduction in PPE particle size and the improvement in PPE particle uniformity are additional indicators of improved compatibility between the PPS and PPE with nitrogen contents greater than about 600 ppm and functionalized PPE.

## Claims

**1.** A composition comprising:
(a) a poly(phenylene ether) resin;
(b) a poly(arylene sulfide) resin; and
(c) a maleimide compound;
wherein the poly(phenylene ether) resin is selected from the group of poly(phenylene ether) resins consisting of poly(phenylene ether) resins with nitrogen contents greater than about 600 ppm and functionalized poly(phenylene ether) resins.

**2.** The composition of Claim 1, wherein the functionalized poly(phenylene ether) resins are derived from reacting a poly(phenylene ether) resin with at least one functionalizing agent in amount up to about 8% by weight based on the weight of the poly(phenylene ether) resin.

**3.** The composition of Claim 2, wherein the functionalizing agent is selected from the group consisting of functionalized olefinic compounds and non-polymeric polycarboxylic acids.

**4.** The composition of Claim 1, wherein the maleimide compound comprises a solid or liquid maleimide compound containing at least two maleimide groups.

**5.** The composition of Claim 1, wherein, based on the total weight of the composition, the poly(phenylene ether) resin is present at a level from about 5% to about 95% by weight and the poly(arylene sulfide) resin is present at a level from about 5% to about 95% by weight.

**6.** The composition of Claim 5, wherein the maleimide compound is present in an amount effective to provide a composition which exhibits improved physical properties over the same composition without the maleimide compound.

**7.** The composition of Claim 5, further comprising at least one reinforcing filler present at a level from about 2% to about 50% by weight based on the total weight of the composition.

**8.** The composition of Claim 7, wherein the reinforcing filler is selected from the group consisting of glass fibers, carbon fibers, potassium titanate single crystal fibers, aluminum oxide fibers, glass beads, hollow glass beads, wollastonites, talcs, micas, chalks, quartzes, natural kaolins, calcined kaolins, and mixtures thereof.

**9.** The composition of Claim 5 further comprising an impact modifier present at a level from about 2% to about 20% by weight based on the total weight of the composition.

**10.** The composition of Claim 9, wherein the impact modifier is selected from the group consisting of:
(i) a block copolymer of alkenyl aromatic compounds and dienes;
(ii) epoxy functional α-olefin elastomers; and
(iii) a mixture of (i) and (ii).

**11.** The composition of Claim 10, wherein the block copolymer is a triblock copolymer and wherein the block copolymer comprises polystyrene endblocks and a selectively hydrogenated diene-derived midblock

**12.** The composition of Claim 5, further comprising at least one alkenyl aromatic polymer.

**15.** An article made from a composition comprising:
(a) a poly(phenylene ether) resin;
(b) a poly(arylene sulfide) resin; and
(c) a maleimide compound
wherein the poly(phenylene ether) resin is selected from the group of poly(phenylene ether) resins consisting of poly(phenylene ether) resins with nitrogen contents greater than about 600 ppm and functionalized poly(phenylene ether) resins.

**16.** A method for making a composition comprising: intimately admixing a poly(phenylene ether) resin, a poly(arylene sulfide) resin, and a maleimide compound; wherein the poly(phenylene ether) resin is selected from the group of poly(phenylene ether) resins consisting of poly(phenylene ether) resins with nitrogen contents greater than about 600 ppm and functionalized poly(phenylene ether) resins.

**17.** A composition consisting essentially of:
(a) a poly(phenylene ether) resin;
(b) a poly(arylene sulfide) resin; and
(c) a maleimide compound;
wherein the poly(phenylene ether) resin is selected from the group of poly(phenylene ether) resins consisting of poly(phenylene ether) resins with nitrogen contents greater than about 600 ppm and functionalized poly(phenylene ether) resins.

**18.** A composition consisting essentially of:
(a) a poly(phenylene ether) resin;
(b) a poly(arylene sulfide) resin;
(c) a maleimide compound; and
(d) at least one reinforcing filler;
wherein the poly(phenylene ether) resin has a nitrogen contents greater than about 600 ppm.

**19.** A composition consisting essentially of:
(a) a functionalized poly(phenylene ether) resin;
(b) a poly(arylene sulfide) resin; and
(c) a maleimide compound.

**20.** A composition consisting essentially of:
(a) a functionalized poly(phenylene ether) resin;
(b) a poly(arylene sulfide) resin;
(c) a maleimide compound; and
(d) at least one reinforcing filler.
